# EUROPEAN PATENT SPECIFICATION

(11) **EP 2 553 129 B1**
(45) Date of publication and mention of the grant of the patent: **19.06.2019**
(21) Application number: 11761850.4
(22) Date of filing: 20.01.2011
(51) Int. Cl.: C22B 23/00, C22B 23/06, C22B 3/08, C22B 3/20

(54) **LOW ACID LEACHING OF NICKEL AND COBALT FROM LEAN IRON-CONTAINING NICKEL ORES**
GERINGE SÄURELAUGUNG VON NICKEL UND KOBALT AUS NICKELERZEN MIT GERINGEM EISENGEHALT
LIXIVIATION FAIBLEMENT ACIDE DE NICKEL ET DE COBALT À PARTIR DE MINERAIS DE NICKEL PAUVRES CONTENANT DU FER

(30) Priority: 01.04.2010 US 341645 P
(43) Date of publication of application: 06.02.2013
(73) Proprietor: INCOR TECHNOLOGIES LIMITED, Charlestown, Nevis (KN)
(72) Inventor: DREISINGER, David, Delta British Columbia V4K 4K2 (CA); CLUCAS, James, Vancouver British Columbia V6C 3E8 (CA)
(74) Representative: Regimbeau
(86) International application number: PCT/CA2011/000074
(87) International publication number: WO 2011/120127

(56) References cited:
- EP-A1- 1 731 623
- WO-A1-2009/146485
- GB-A- 101 285
- GB-A- 1 387 269
- US-A- 3 082 080
- US-A- 3 793 432
- US-A- 5 571 308
- US-A1- 2002 006 370

## Description

### FIELD OF THE INVENTION

The invention pertains to methods for recovering nickel and cobalt from lean ores, including methods of using starvation levels of acid for prolonged periods of time to leach nickel and cobalt from lean ores that also contain iron.

### BACKGROUND OF THE INVENTION

Nickel laterite ores are oxidized or weathered ores that typically occur in tropical areas where there has been an opportunity for mineralogical transformation from the original mineral deposit to a lateritic profile. Nickel laterites are expected to be an increasing source of nickel for the world market due to inadequate resources of nickel sulphide deposits.

The nickel laterite deposits fall broadly into two categories, limonite laterite deposits and saprolite laterite deposits. The limonite deposits have nickel contained substantially within an iron oxy-hydroxide mineral called goethite. The recovery of nickel from these limonite ores usually requires treatment of the whole ore using hydrometallurgy (although in some cases physical upgrading may be possible), possibly after an initial pyrometallurgical treatment. The direct hydrometallurgy route generally applied is high pressure acid leaching (HPAL). This process generally uses ∼245-270°C autoclave leaching of the limonite with sulphuric acid to dissolve the goethite and re-precipitate hematite. The nickel and cobalt contained within the goethite mineral are released during the high pressure acid leach and subsequently recovered from solution following a solid-liquid separation, solution purification and recovery of a nickel product (for example, nickel metal cathode, nickel metal or nickel oxide powder, mixed hydroxide precipitate or mixed sulphide precipitate). An alternative process is the Caron process which first subjects the limonite to a reduction roast process to recrystallize the goethite to hematite and reduce nickel, cobalt and some Iron to the metallic state. The calcine from the reduction roast is then oxidatively leached in a solution of ammonia-ammonium carbonate to dissolve nickel and cobalt. This solution then advances to metal recovery for nickel and cobalt.

Saprolite laterite deposits contain basic minerals that are concentrated in magnesium silicates. Magnesium silicates consume excessive amounts of acid in HPAL. The Caron process may be used for saprolites but recovery is generally low. Commonly, smelting is applied to saprolites to produce either a Fe-Ni (ferro nickel) product or a Ni-Co-S matte. The ferro nickel product can be used to make stainless steel and the nickel-cobalt-sulphur matte can be refined to nickel and cobalt metal.

In general, processes involving sulphation require the use of aqueous or concentrated sulphuric acid or can be conducted with sulphurous gases (sulphur dioxide and sulphur trioxide) as the sulphating agent (Canterford, J.H. (1975), "The Treatment of Nickelferous Laterites", Minerals Sci. and Eng. 7: 3-17 (Canterford)). Alternatively, sulphuric acid may be produced "in-situ" by oxidation of sulphur, pyrite or other metal sulphides (CA922,903). This process chemistry combines high temperature oxidation of sulphides with high temperature leaching of laterite ores. In many instances, the leach liquors that are produced by sulphation processes are highly contaminated, and there are accordingly many recovery procedures that may be used to isolate nickel and cobalt or to remove contaminants. For example, dissolved iron may be removed by using either a jarosite process or a goethite process. Other procedures involve the selective cementation of nickel by iron, or the selective precipitation of a high-grade sulphide product using activated pyrrhotite.

Atmospheric laterite leaching processes have also been described. The use of a high temperature autoclave pressure vessel may for example be avoided through the use of "pug roasting" in which the acid is added directly to the laterite feed followed by roasting (Canterford). Acid leaching under reflux conditions at atmospheric pressure has however been reported to result in the generation of a contaminated liquor. In addition, high acid concentrations and extended leaching times have been used in examples reporting high levels of recovery of the contained nickel and cobalt (Canterford). One problem with this process is the generation of waste liquors that may be difficult to treat. For example, after nickel and cobalt recovery, an acid ferric sulphate solution may result, and the disposal of this liquor may be problematic (Canterford).

In an atmospheric leaching treatment, as for example disclosed in US6261527, the leaching reactions for limonite leaching can be specified as follows:

2FeO(OH) + 3H₂SO₄ = Fe₂(SO₄)₃ + 4H₂O

NiO + H₂SO₄ = NiSO₄ + H₂O

CoO + H₂SO₄ = CoSO₄ + H₂O

MgO + H₂SO₄ = MgSO₄ + H₂O

ZnO + H₂SO₄ = ZnSO₄ + H₂O

CuO + H₂SO₄ = CuSO₄ + H₂O

Al₂O₃ + 3H₂SO₄ = Al₂(SO₄)₃ + 3H₂O

Cr₂O₃ + 3H₂SO₄ = Cr₂(SO₄)₃ + 3H₂O

MnO + H₂SO₄ = MnSO₄ + H₂O

MnO₂ + SO₂ = MnSO₄

The result of atmospheric leaching of limonites is generally the dissolution of large amounts of iron, aluminum and other elements along with nickel and cobalt, hence the importance of the saprolite leaching/jarosite precipitation step. Saprolite leaching consumes excess acid and drives the precipitation of jarosite or goethite precipitates.

For the purpose of writing saprolite reactions, the "serpentine" mineral may be represented as a hydrated magnesium silicate Mg₃[Si₂O₅](OH)₄. Alkali cations are added to provide species for forming alunite and jarosite precipitates. For the purpose of writing reactions, the alkali cation will be provided by sodium chloride (NaCl) and sodium jarosite/alunite will be formed. The saprolite reactions can be specified as follows:

Mg₃[Si₂O₆](OH)₄ + 3H₂SO₄ = 3MgSO₄ + 2SiO₂ + 5H₂O

3Fe₂(SO₄)₃ + 2H₂O + 2Mg₃[Si₂O₅](OH)₄ + 2NaCl = 2NaFe₃(SO₄)₂(OH)₆ + 5MgSO₄ + 4SiO₂ + MgCl₂

3Al₂(SO₄)₃ + 2H₂O + 2Mg₃[Si₂0₅](OH)₄ + 2NaCl= 2NaAl₃(SO₄)₂(OH)₆ + 5MgSO₄ + 4SiO₂ + MgCl₂

An alternative embodiment of atmospheric leaching, incorporating goethite precipitation, has been reported (Liu, H. et al. (2004), "Atmospheric Leaching of Laterites with Iron Precipitation as Goethite", International Laterite Nickel Symposium - 2004, Ed. Imrie, W.P., et al., TMS (Warrendale), pp. 347-368), in which no source of alkali cation is provided to drive the formation of jarosite and alunite.

A further alternative process involves direct leaching of highly serpentinized saprolite ores using high strength sulphuric acid in either fresh or seawater (US6,379,637; US6,391,089; and Curtook, W. (2004), "Improvement to the Acid Pressure Leaching of Nickel Laterite Ores", International Laterite Nickel Symposium - 2004, Ed. Imrie, W.P., et al, TMS (Warrendale), pp. 325-334).
Another process is the one described in WO2009/146485 where leaching a metal value such as nickel and/or cobalt from an ore such as laterite is carried out by using a first leach solution comprising a mineral acid and an organic acid such as malic acid to provide, after contact with the ore, a leachate including the metal value, follow by addition of organic acid.

There are accordingly a range of processes in which large amounts of acid are applied to extract a substantial quantity of nickel from nickel laterite ores.

### SUMMARY OF THE INVENTION

The invention provides processes that use relatively low ("starvation") levels of acid to leach lean nickel ores, including processes that provide relatively high levels of extraction of nickel and cobalt from nickel laterite ores, in conjunction with relatively low levels of iron extraction.

In one aspect, the invention provides methods for recovering nickel and/or cobalt and/or by-product metals from a lean ore, such as a nickel laterite ore or a Caron plant tailing material. These methods may involve subjecting the material to a prolonged acid leach with application of starvation levels of acid. An alkali may be added to the leach slurry to neutralize the residual acidity in the slurry and to precipitate metals such as iron, aluminum and chromium as metal hydroxides. The leached ore (or tailing) residue may be separated from the iron/aluminum/chromium free solution to recover nickel and cobalt, for example by a process of mixed hydroxide precipitation, mixed sulphide precipitation, solvent extraction/electrowinning or solvent extraction and hydrogen reduction. In alternative embodiments, the leach slurry after neutralization with alkali may be directed to an "in-pulp" recovery process, such as resin-in-pulp, so as to avoid the separation of leached ore (ore tailing) residue from the iron/aluminum/chromium free solution prior to nickel and cobalt recovery. The final solutions and/or washed ore (or tailing) residue may be subjected to environmental treatment prior to disposal.

### BRIEF DESCRIPTION OF THE DRAWINGS

**Figure 1** is a flowsheet showing the leaching of a lean ore with starvation levels of acid followed by partial neutralization to precipitate contaminating elements, the separation of solid from liquid and washing of the residue to produce a nickel and cobalt-containing solution, nickel and cobalt recovery and finally environmental treatment of waste solids and liquid effluents;
**Figure 2** is a flowsheet showing the leaching of the lean ore with starvation levels of acid followed by partial neutralization to precipitate contaminating elements, the use of resin-in-pulp ion exchange recovery for nickel and cobalt and elution of the loaded resin to produce the nickel and cobalt-containing solution, nickel and cobalt recovery and finally environmental treatment of waste solids and liquid effluents;

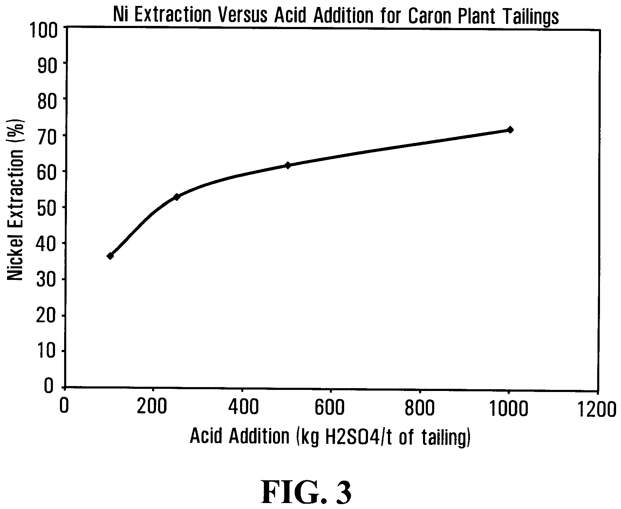

**Figure 3** is a graph that shows the extraction of nickel as a function of acid addition for the leaching of a sample of Caron plant tailing; and

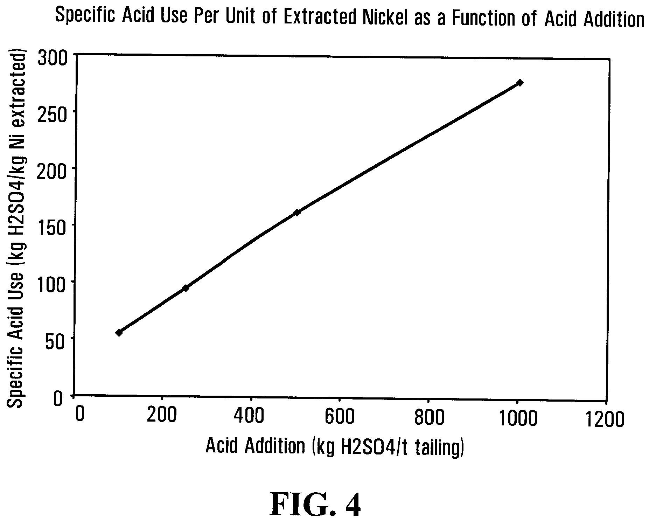

**Figure 4** is a graph that shows the specific use of acid per unit of nickel extraction as a function of acid addition for the leaching of the sample of Caron plant tailing.

### DETAILED DESCRIPTION OF THE INVENTION

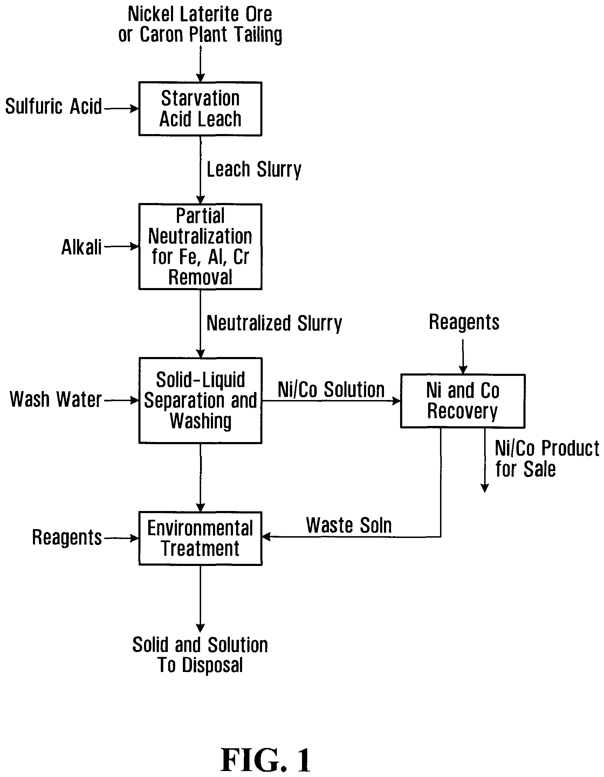

In accordance with one aspect of the invention, there is provided a method for recovering nickel, cobalt and by-product metals from a lean ore, shown generally in Figure 1. The lean ore may for example be a nickel laterite ore or a process residue such as a Caron plant tailing.

In the context of the invention, the phrase "lean ore" may for example refer to a saprolite ore of <1.5% Ni, or < 1% Ni. Such ores may also be characterized by a Mg concentration of 10% or more. An alternative lean ore, for example from Caron plant tailings, may be <0.5% Ni and <0.2% Co material. In general, lean ores are ores that are not economic to treat by conventional ferronickel or matte smelting.

The ore may for example be prepared as a finely ground slurry using mining, crushing and grinding techniques. In the case of Caron plant tailings, the tailings are generally finely divided and may not require any additional size reduction. The slurry may for example be prepared using fresh water, salt water, brackish water or recycled water. In selected embodiments, the solid content of the slurry may for example be in the range of about 2% to about 65%, or at a level where the minimum content of water is added while still maintaining acceptable rheological properties for the slurry.

The Examples herein illustrate embodiments in which it has proved possible to treat the slurry with starvation quantities of acid while producing an acceptable nickel and cobalt extraction without incurring an unnecessarily large acid consumption. To provide acceptable conditions to achieve this extraction, the temperature of starvation acid leaching may vary from ambient temperature to near the boiling point of the acid solution; and, the time of leaching may vary from a few hours to a number of days. The mode of contact of the acid and the slurry may for example be in the form of a conventional atmospheric stirred reactor, a vat, a heap or a recirculating thickener. In some embodiments, the underflow and overflow of a recirculating thickener may for example be continuously re-circulated to provide suitable solid/liquid contact.

In order to facilitate cobalt extraction, a reductant may be added to the slurry during leaching. Removal of iron from solution may be promoted by the addition of an alkali and by aerating or oxygenating or adding a chemical oxidant to the slurry to oxidize ferrous iron (Fe (III)) to ferric iron (Fe(II)) such that an iron-containing precipitate may form. The leach slurry may include partially leached ore solids and a solution containing dissolved nickel, cobalt and various contaminating elements such as iron, aluminum, silica, chromium, zinc, magnesium, manganese or copper. In some embodiments, the leachate maybe subjected to a partial neutralization to precipitate contaminating elements prior to a nickel recovery step. This precipitation may for example be carried out using a suitable source of alkali, such as limestone, lime, magnesia, soda ash, sodium hydroxide or any another alkali. In selected embodiments, the temperature for partial neutralization may fall in the range of ambient up to about the boiling point of the acid. The pH for the partial neutralization may vary with the temperature used, and in selected embodiments will generally fall in the range of pH from about 3.5 to about 5.5.

After partial neutralization, the leach slurry may be subjected to a solid-liquid separation and washing process in order to separate a nickel and cobalt-containing solution from the partially leached solids. This may for example be accomplished in conventional or high-rate or deep bed thickeners arranged in a counter-current fashion to provide effective washing of the solids. In selected embodiments, the number of countercurrent thickeners may be between 6 and 8. The wash ratio (wash water added per unit of solution in the underflow slurry of the thickener expressed as tonnes of wash per tonne of solution) may for example be between about 1.0 and about 3.0 or in the range of about 1.6 to about 2.0. Alternatively, the solids may be filtered and washed with a minimum amount of wash water necessary to effectively wash the solid residue.

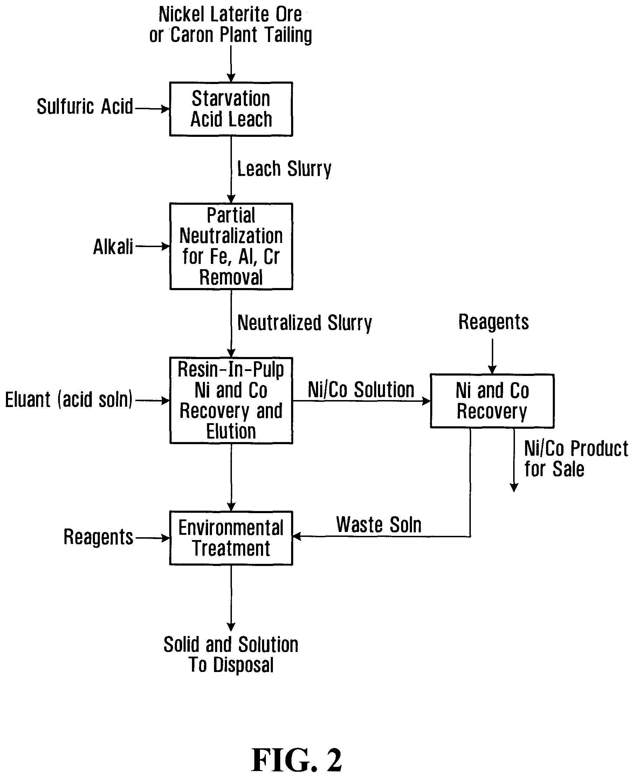

An alternative process for nickel and cobalt recovery involves a resin-in-pulp process (Figure 2). The resin-in-pulp process may involve the countercurrent movement of resin particles through a series of tanks equipped with screens to separate the resin particles from the particles of partially leached ore material. The size of the resin particles may accordingly be selected to be coarser than the coarsest particles of slurry solids. There may be a plurality of stages of countercurrent adsorption, for example between 2 and 10 or more in the range of 3 to 4. In some embodiments, a suitable resin adsorbent for nickel and cobalt recovery would be a resin of the iminodiacetic acid chelation type. For example, the Lanxess resin TP207 may be used. The loaded resin may be recovered by screening (or other suitable means) and directed to washing and acid elution for the recovery of nickel and cobalt from the eluate.

In some embodiments, air or oxygen or a chemical oxidant may be added during the leach process, so as to oxidize the ferrous iron that is leached. In any event, in alternative embodiments, oxidation of reduced iron will be required either during leaching or prior to the resin in pulp step. Iron removal and pH adjustment may only be necessary if the resin-in-pulp method of nickel and cobalt recovery is practiced, with particular resins. If solid-liquid separation using thickeners or filters is used, then iron removal and pH adjustment may be deferred. Further, there are resins that may not require pH adjustment (eg. Dowex M4195 by the Dow company) that may be used directly to recover nickel and cobalt in the presence of dissolved iron (resins that are selective for nickel and cobalt, so that residual iron in solution will not interfere with separation).

The nickel and cobalt-containing solution recovered from either the solid-liquid separation circuit or the resin-in-pulp circuit may be directed to a nickel and cobalt product recovery step. This may include one or more of the steps of mixed hydroxide precipitation, mixed sulphide precipitation, solvent extraction or ion exchange recovery of nickel and cobalt; followed by metal electrolysis, precipitation or reduction to metal.

The environmental streams emanating from processes of the invention may be treated to meet environmental regulations, including streams emanating from the solid-liquid separation circuit, the resin-in-pulp barren slurry, and/or solutions or solid residues from the nickel and cobalt recovery step. This may for example involve further neutralization with limestone or lime before deposition in a waste impoundment.

### EXAMPLES

### Example 1. Acid leaching of Caron Plant Tailings.

100 g of Caron plant tailings analyzing 0.51% Ni and 0.054% Co were leached in a series of four experiments. The full analysis of the tailing material is shown in Table 1.

**Table 1. Elemental analysis of Caron plant tailings.**

| **Al** | **Ca** | **Co** | **Cu** | **Fe** | **Mg** | **Mn** | **Ni** | **Zn** |
|---|---|---|---|---|---|---|---|---|
| % | % | g/t | g/t | % | % | g/t | g/t | g/t |
| 3.39 | 0.44 | 538 | 1144 | 30.86 | 3.40 | 7452 | 5072 | 436 |

A slurry having a pulp density of 100 g of tailings slurried in 1 L of water was prepared. For the four experiments, 10, 25, 50 or 100 g of concentrated sulphuric acid were added, corresponding to additions of 100, 250, 500 or 1000 kg H₂SO₄/t tailing. The corresponding extractions of nickel and cobalt are shown in Table 2. The total leach time was 48 h at 50°C.

**Table 2. Extractions of nickel and cobalt for varying amounts of concentrated sulphuric acid added to Caron plant tailings.**

| **Test** | **Temperature** | **Amount of Acid** | **Ni Extraction** | **Co Extraction** |
|---|---|---|---|---|
| | (°C) | (kg/t) | (%) | (%) |
| I | 50 | 100 | 36.51 | 65.34 |
| II | 50 | 250 | 52.93 | 76.47 |
| III | 50 | 500 | 61.94 | 82.10 |
| IV | 50 | 1000 | 72.19 | 91.32 |

Figure 5 shows that the addition of ever greater amounts of acid in the range of 100 to 1000 kg H₂SO₄/t tailing produces incremental increases in nickel recovery. Using the same test data, the specific use of acid as a function of acid addition is illustrated in Figure 6 and shows that with ever higher acid addition, the use of acid increases more than 5-fold from 55 to 278 kg H₂SO₄/kg of Ni extracted. The range of acceptable acid addition may be calculated based on economic principles for each case, and may for example fall in the range of 50 to 300 kg H₂SO₄/t or more specifically, in the vicinity of 100 kg H₂SO₄/t.

### Example 2. Acid Leaching of Caron Plant Tailings at Variable Temperature with Oxygen Sparging.

100 g of Caron plant tailings was slurried in 1 L of water for each of four tests at temperatures from 50°C to 80°C with sparging of oxygen. 10 g of concentrated sulphuric acid was added to each test corresponding to 100 kg H₂SO₄/t tailing. The corresponding extractions of nickel and cobalt are shown in Table 3. The total leach time was 48 h. There is a clear benefit in operation at higher temperature with respect to better overall extraction of nickel and cobalt.

**Table 3. Extractions of nickel and cobalt from Caron plant tailings at various temperatures.**

| **Test** | **Temperature** | **Amount of Acid** | **O₂ Addition** | **Ni Extraction** | **Co Extraction** |
|---|---|---|---|---|---|
| | (°C) | (kg/t) | | (%) | (%) |
| XVI | 50 | 100 | Yes | 41.90 | 64.56 |
| XVII | 60 | 100 | Yes | 45.74 | 64.11 |
| XVIII | 70 | 100 | Yes | 51.13 | 69.73 |
| XIX | 80 | 100 | Yes | 53.29 | 70.66 |

### Example 3. Acid Leaching of Nickel Saprolite Ore with 100 and 200 kg H₂SO₄/t ore.

A nickel saprolite ore was obtained with the composition shown in Table 4. The ore sample was ground to a P80 of 50 µm particle size in a laboratory grinding mill.

**Table 4. Elemental analysis of a nickel saprolite ore.**

| **SiO₂** | **Cu** | **Zn** | **Co** | **Ni** | **Cr** | **Mn** | **Al** | **Ca** | **Fe** | **Mg** |
|---|---|---|---|---|---|---|---|---|---|---|
| % | ppm | ppm | ppm | ppm | ppm | ppm | % | % | % | % |
| 43.05 | 28 | 142 | 122 | 5108 | 3407 | 1194 | 0.91 | 0.21 | 7.77 | 17.13 |

For each of two experiments, 500 g of saprolite ore was slurried in 1 L of deionized water in a beaker. 50 or 100 g of concentrated sulphuric acid was added to each of two tests corresponding to acid additions of 100 and 200 kg H₂SO₄/t tailing, respectively. The total leach time was 48 h at 80°C. Both of the mixtures were agitated at 900 rpm. Following the acid leach, each slurry was subjected to a solid-liquid separation and washing with deionized water to separate the nickel and cobalt-containing solution from the solids. The wash volume for the addition of 100 kg H₂SO₄/t tailing was 1500 mL and following separation and washing, the solids had a mass of 462.8 g. The wash volume for the addition of 200 kg H₂SO_{4/}t tailing was 2470 mL and following separation and washing, the solids had a mass of 405.78 g.

The results achieved were to realize 35.7% Ni extraction at 100 kg/t acid addition and 50.05% Ni extraction at 200 kg/t acid addition. The comparable numbers for cobalt were 62.16% and 70.92%, respectively. In terms of Fe extraction, only 0.25% Fe was extracted at 100 kg/t acid addition and 3.16% Fe was extracted at 200 kg/t acid addition. All extractions are reported as metal in solution versus metal in the original 500 g of feed material.

In each case the acid was nearly completely reacted. For the first test (100 kg/t acid), the final pH was 2.80 (Table 5) and in the second case (200 kg/t acid) the pH was 1.25 (Table 14), indicating slightly greater residual acid in solution. If the Redox potential is high (eg. +700 mV), then this may indicate that excess MnO₂ containing Co may be present in the solids. This may give a low value of Co extraction, that could be improved in some embodiments by addition of a soluble reductant. For example, sulfur dioxide may be added to effect a reduction in the oxidation potential and the leaching of oxidized forms of manganese and cobalt by the following putative reactions:

MnO₂ + SO2 = MnSO4

Co2O3 + SO2 + H2SO4 = 2CoSO4 + H2O

**Table 5. pH and redox potential of nickel saprolite ore slurry at various time Intervals to which 100 kg of H₂SO₄/t of ore was added.**

| **Samples** | | | | |
|---|---|---|---|---|
| **Sample Name** | **Time (h)** | **pH (80°C)** | **Redox (80°C, +200 mV)** | **V (mL)** |
| VII 0h | 0 | 0.49 | 573 | 10 |
| VII 1h | 1 | 1.74 | 670 | 7.0 |
| VII 2h | 2 | 2.00 | 657 | 8.0 |
| VII 4h | 4 | 2.17 | 647 | 8.0 |
| VII 8h | 8 | 2.30 | 630 | 8.0 |
| VII 24h | 24 | 2.49 | 578 | 8.0 |
| VII 32h | 32 | 2.60 | 541 | 7.5 |
| VII 48h | 48 | 2.80 | 480 | 510 |

**Table 6. pH and redox potential of nickel saprolite ore slurry at various time intervals to which 200 kg of H₂SO_{4/}t of ore was added.**

| **Samples** | | | | |
|---|---|---|---|---|
| **Sample Name** | **Time (h)** | **pH (80°C)** | **Redox (80°C, +200 mV)** | **V (ml)** |
| VIII 0h | 0 | 0.04 | 567 | 10 |
| VIII 1h | 1 | 1.15 | 569 | 7.5 |
| VIII 2h | 2 | 1.45 | 539 | 8.0 |
| VIII 4h | 4 | 1.70 | 518 | 7.0 |
| VIII 8h | 8 | 1.86 | 500 | 7.0 |
| VIII 24h | 24 | 1.42 | 484 | 7.0 |
| VIII 32h | 32 | 1.19 | 409 | 7.0 |
| VIII 48h | 48 | 1.25 | 467 | 470 |

The acid consumption calculated from the major elements dissolved in solution is reported in Tables 15 and 16. For the 100 kg/t acid addition, the soluble metals (Al, Ca, Co, Cu, Fe, Mg, Mn, Ni and Zn) accounted for 79.9 kg/t acid consumption (Table 7). The difference is likely due to formation of some gypsum and possibly some jarosite during the leach (CaSO₄.2H₂O and NaFe₃(SO₄)₂(OH)₆). These solid precipitates consume acid (sulphate) in their chemistry of formation.

**Table 7. Mass balance for nickel saprolite ore slurry to which 100 kg H₂SO₄/t of ore was added.**

| | | Al | Ca | Co | Cu | Fe | Mg | Mn | Ni | Zn |
|---|---|---|---|---|---|---|---|---|---|---|
| Input | Mass/Vol | | | | | | | | | |
| Feed Sample | 500 | 0.91 | 0.21 | 122 | 28 | 7.77 | 17.13 | 1194 | 5108 | 142 |
| | | | | | | | | | | |
| Units | Total | 4.550 | 1.050 | 0.061 | 0.014 | 38.85 | 85.65 | 0.597 | 2.554 | 0.071 |

| Output | | | | | | | | | | |
|---|---|---|---|---|---|---|---|---|---|---|
| Residue | 462.8 | 0.87 | 0.06 | 72 | 46 | 8.06 | 16 | 489 | 3544 | 114 |
| Solutions | | | | | | | | | | |
| VII 1h | 7.0 | 548.4 | 517.9 | 22.27 | 4.91 | 1789 | 5745 | 206.83 | 725.01 | 12.91 |
| VII 2h | 8.0 | 542.2 | 516.3 | 26.01 | 5.14 | 1652 | 6308 | 241.32 | 756.05 | 14.40 |
| VII 4h | 8.0 | 543.4 | 518.4 | 29.41 | 5.40 | 1476 | 6823 | 276.18 | 797.79 | 15.83 |
| VII 8h | 8.0 | 514 | 524.7 | 31.35 | 5.34 | 1243 | 7283 | 306.97 | 842.58 | 16.75 |
| VII 24h | 8.0 | 476.6 | 524.9 | 36.90 | 4.90 | 382 | 7711 | 352.96 | 897.06 | 18.14 |
| VII 32h | 7.5 | 417.4 | 506 | 36.75 | 4.44 | 165.15 | 8044.5 | 372.72 | 925.19 | 17.34 |
| VII 48h | 510.0 | 429.5 | 502.2 | 44.91 | 4.28 | 70.78 | 9480.1 | 460.01 | 1102.84 | 14.23 |
| VII Wash | 1500.0 | 69.4 | 279.2 | 9.06 | 0.62 | 5.09 | 2144.8 | 85.73 | 207.32 | 2.87 |
| | | | | | | | | | | |

| Units | | | | | | | | | | |
|---|---|---|---|---|---|---|---|---|---|---|
| | | | | | | | | | | |
| Residue | | 4.026 | 0.370 | 0.033 | 0.021 | 37.302 | 74.048 | 0.226 | 1.640 | 0.053 |
| Solutions | | 0.004 | 0.004 | 0.000 | 0.000 | 0.013 | 0.040 | 0.001 | 0005 | 0.000 |
| VII 2h | | 0.004 | 0.004 | 0.000 | 0.000 | 0.013 | 0.050 | 0.002 | 0.006 | 0.000 |
| VII 4h | | 0.004 | 0.004 | 0.000 | 0.000 | 0.012 | 0.055 | 0.002 | 0.006 | 0.000 |
| VII 8h | | 0.004 | 0.004 | 0.000 | 0.000 | 0.010 | 0.058 | 0.002 | 0.007 | 0.000 |
| VII 24h | | 0.004 | 0.004 | 0.000 | 0.000 | 0.003 | 0.062 | 0.003 | 0.007 | 0.000 |
| VII 32h | | 0.003 | 0.004 | 0.000 | 0.000 | 0.001 | 0.060 | 0.003 | 0.007 | 0.000 |
| VII 48h | | 0.219 | 0.256 | 0.023 | 0.002 | 0.036 | 4.835 | 0.235 | 0.562 | 0.007 |
| VII Wash | | 0.104 | 0.419 | 0.014 | 0.001 | 0.006 | 3.217 | 0.129 | 0.311 | 0.004 |
| | | | | | | | | | | |
| | **Total** | 4.373 | 1.069 | 0.071 | 0.025 | 37.397 | 82.426 | 0.603 | 2.552 | 0.065 |
| | | | | | | | | | | |
| | **Balance (IN-OUT)/IN (%)** | 3.9 | -1.8 | -16.8 | -76.0 | 3.7 | 3.8 | -1.0 | 0.1 | 8.4 |
| | | | | | | | | | | |
| | **Extraction (%)** | 7.62 | 66.57 | 62.16 | 23.91 | 0.25 | 9.78 | 63.13 | 35.70 | 17.33 |
| | | | | | | | | | | |
| | **Acid Consumption (g)** | 1.89 | 1.71 | 0.06 | 0.01 | 0.25 | 33.80 | 0.67 | 1.52 | 0.02 |
| | | | | | | | | | | |
| | **Total Acid Consumption** | 39.99 | | | | | | | | |
| | | 79.9 | kg/t | | | | | | | |

Similarly, for the test at 200 kg H₂SO₄/t, the acid consumption calculation showed a value of 161 kg/t saprolite (Table 8). The consumption of acid is (as expected) largely driven by the dissolution of magnesium. The other major contributors are Al, Ca, Fe, Mn and Ni. Minor acid consumption is attributed to Co, Cu, Zn.

**Table 8. Mass balance for nickel saprolite ore slurry to which 200 kg H₂SO₄/t of ore was added.**

| | | Al | Ca | Co | Cu | Fe | Mg | Mn | Ni | Zn |
|---|---|---|---|---|---|---|---|---|---|---|
| Input | Mass/Vol | | | | | | | | | |
| Feed Sample | 500 | 0.91 | 0.21 | 122 | 28 | 7.77 | 17.13 | 1194 | 5108 | 142 |
| | | | | | | | | | | |
| Units | Total | 4.55 | 1.05 | 0.06 | 0.01 | 38.85 | 85.65 | 0.60 | 2.55 | 0.07 |

| Output | | | | | | | | | | |
|---|---|---|---|---|---|---|---|---|---|---|
| Residue | 405.78 | 0.8 | 0.09 | 62 | 38 | 7.98 | 14 | 450 | 2946 | 93 |

| Solutions | | | | | | | | | | |
|---|---|---|---|---|---|---|---|---|---|---|
| VII 1h | 7.5 | 994.9 | 564.3 | 42.32 | 11.40 | 4008.71 | 15126.1 | 407.06 | 1276.66 | 84.24 |
| VII 2h | 8.0 | 1001.3 | 522.6 | 45.67 | 12.07 | 4071.93 | 16975 | 444.95 | 1358.20 | 91.80 |
| VII 4h | 7.0 | 937.8 | 537.6 | 44.31 | 11.42 | 3764.44 | 17258.4 | 437.09 | 1320.96 | 87.04 |
| VII 6h | 7.0 | 930.3 | 529.3 | 45.14 | 11.44 | 3675.25 | 17729.3 | 444.96 | 1311.89 | 88.96 |
| VII 24h | 7.0 | 862.7 | 540.1 | 44.19 | 11.00 | 2399.43 | 18093.3 | 435.67 | 1328.15 | 85.22 |
| VII 32h | 7.0 | 836.3 | 566.5 | 43.78 | 10.60 | 1985.37 | 17935.4 | 426.21 | 1335.31 | 65.31 |
| VII 48h | 470.0 | 980.8 | 564.8 | 51.74 | 12.44 | 1523.15 | 21540.6 | 496.51 | 1588.19 | 92.00 |
| VII Wash | 2470.0 | 112.8 | 166.3 | 6.89 | 1.47 | 148.79 | 2445.6 | 58.53 | 192.01 | 11.54 |
| | | | | | | | | | | |

| | | | | | | | | | | |
|---|---|---|---|---|---|---|---|---|---|---|
| | | | | | | | | | | |
| Residue | | 3.246 | 0.365 | 0.025 | 0.015 | 32.381 | 56.809 | 0.183 | 1.195 | 0.038 |
| Solutions | | 0.007 | 0.004 | 0.000 | 0.000 | 0.030 | 0.113 | 0.003 | 0.010 | 0.001 |
| VII 2h | | 0.008 | 0.004 | 0.000 | 0.000 | 0.033 | 0.136 | 0.004 | 0.011 | 0.001 |
| VII 4h | | 0.007 | 0.004 | 0.000 | 0.000 | 0.026 | 0.121 | 0.003 | 0.009 | 0.001 |
| VII 8h | | 0.007 | 0.004 | 0.000 | 0.000 | 0.025 | 0.124 | 0.003 | 0.009 | 0.001 |
| VII 24h | | 0.006 | 0.004 | 0.000 | 0.000 | 0.017 | 0.127 | 0.003 | 0.009 | 0.001 |
| VII 32h | | 0.006 | 0.004 | 0.000 | 0.000 | 0.014 | 0.126 | 0.003 | 0.009 | 0.001 |
| VII 48h | | 0.461 | 0.265 | 0.024 | 0.006 | 0.716 | 10.124 | 0.234 | 0.746 | 0.043 |
| VII Wash | | 0.279 | 0.411 | 0.017 | 0.004 | 0.368 | 6.041 | 0.147 | 0.474 | 0.029 |
| | | | | | | | | | | |
| | **Total** | 4.0263 | 1.0650 | 0.0684 | 0.0254 | 33.6093 | 73.7203 | 0.5828 | 2.4737 | 0.1193 |
| | | | | | | | | | | |
| | **Balance (IN- OUTVIN (%)** | 11.5 | -1.4 | -12.2 | -81.4 | 13.5 | 13.9 | 2.4 | 3.1 | -59.5 |
| | | | | | | | | | | |
| | **Extraction (%)** | 17.14 | 66.65 | 70.92 | 71.23 | 3.16 | 19.74 | 67.03 | 50.05 | 106.39 |
| | | | | | | | | | | |
| | **Acid Consumption (g)** | 4.25 | 1.71 | 0.07 | 0.02 | 3.23 | 68.24 | 0.71 | 2.14 | 0.11 |
| | | | | | | | | | | |
| | **Total Acid Consumption** | 80.5 | g | | | | | | | |
| | | 161.0 | kg/t | | | | | | | |

The Ni, Co, Zn, Cu, Mn levels increased during each leach example. The Mg level starts high and finishes higher as the major source of acid consumption. The Al level in solution peaks and declines slowly for the 100 kg/t example while it is almost unchanged at the end for the 200 kg/t example. The Fe level in solution peaks at 1789 mg/L for the 100 kg/t example and declines to 71 mg/L. This is due to hydrolysis of the Fe₂(SO₄)₃ to form jarosite with consequent release of acid. This is a favourable reaction as the acid released upon Fe precipitation continues to leach Ni and other metals. As a result, lower amounts of acid may be used to obtain reasonable recoveries of nickel and cobalt.

3Fe₂(SO₄)₃ + H₂O = 2(H₃O)Fe₃(SO₄)₂(OH)₆ + 5H₂SO₄

For the 200 kg/t example, the Fe in solution peaked at over 4000 mg/L and declined to around 1500 mg/L by the same reaction.

Although various embodiments of the invention are disclosed herein, many adaptations and modifications may be made within the scope of the invention in accordance with the common general knowledge of those skilled in this art. Such modifications include the substitution of known equivalents for any aspect of the invention in order to achieve the same result in substantially the same way. Numeric ranges are inclusive of the numbers defining the range. The word "comprising" is used herein as any open-ended term, substantially equivalent to the phrase "including, but not limited to", and the word "comprises" has a corresponding meaning. As used herein, the singular forms "a", "an" and "the" include plural referents unless the context clearly dictates otherwise. Thus, for example, reference to "a thing" includes more than one such thing.

## Claims

1. A method for recovering nickel and cobalt from a lean ore comprising about 7% to about 40% iron, less than about 1.5% nickel and less than about 0.2% cobalt, the method comprising:
leaching a slurry of the lean ore with about 50 to about 300 kg of an acid per tonne of lean ore for about 3 hours to about 72 hours at a temperature between ambient to about the boiling point of the solution to form a leach slurry, wherein less than about 3.5% of iron present in the lean ore is extracted during leaching;
adding an alkali to the leach slurry to adjust the pH of the slurry to a range of about 3.5 to about 5 and to precipitate contaminating elements, wherein a neutralized slurry is formed; and
either:
(a) separating a nickel and cobalt-containing solution from the neutralized slurry; or
(b) extracting nickel and cobalt from the neutralized slurry using a resin-in-pulp process to form a loaded resin;
washing the loaded resin; and
eluting nickel and cobalt from the loaded resin using a second acid to form a nickel and cobalt-containing solution; and
recovering nickel and cobalt from the nickel and cobalt-containing solution, wherein about 60% to about 70% of the cobalt and about 30% to about 55% of the nickel present in the lean ore is recovered.

2. The method according to claim 1, wherein the acid is H₂SO₄.

3. The method according to claim 1, wherein the lean ore is leached with about 100 to about 200 kg of the acid per tonne of lean ore.

4. The method according to claim 1, wherein the lean ore is leached with about 100 kg of the acid per tonne of lean ore.

5. The method according to claim 1, wherein the temperature is about 80°C.

6. The method according to claim 1, wherein the lean ore is a nickel laterite ore.

7. The method according to claim 1, wherein the lean ore is a process tailing.

8. The method according to claim 1, wherein the process tailing is a Caron plant tailing.

9. The method according to claim 1, wherein the ore is leached for about 24 to about 48 hours.

10. The method according to claim 1, further comprising adding a reductant during leaching.

11. The method according to claim 10, wherein the reductant is sulphur dioxide.

12. The method according to claim 1, further comprising aerating or oxygenating the leach slurry prior to or during the addition of an alkali to the leach slurry.

13. The method according to claim 1, wherein the contaminating elements are iron, aluminum, silica, chromium, zing, magnesium, manganese, copper or any combination thereof.

14. The method according to claim 1, wherein the alkali is limestone, lime, magnesia, soda ash or sodium hydroxide.

15. The method according to claim 1, wherein less than about 1% of iron present in the lean ore is extracted during leaching.

## Patentansprüche

1. Verfahren zur Gewinnung von Nickel und Kobalt aus einem mageren Erz, das etwa 7 % bis etwa 40 % Eisen, weniger als etwa 1,5 % Nickel und weniger als etwa 0,2 % Kobalt enthält, wobei das Verfahren Folgendes umfasst:
Auswaschen einer Aufschlämmung des mageren Erzes mit etwa 50 bis etwa 300 kg einer Säure pro Tonne mageren Erzes etwa 3 Stunden bis etwa 72 Stunden lang bei einer Temperatur zwischen Umgebungstemperatur und etwa dem Siedepunkt der Lösung zur Bildung eines Auswaschschlamms, wobei während des Auswaschens weniger als etwa 3,5 % des im mageren Erz vorhandenen Eisens extrahiert werden
Zugabe eines Alkalis zum Auswaschschlamm, um den pH-Wert des Schlamms auf einen Bereich von etwa 3,5 bis etwa 5 einzustellen und kontaminierende Elemente auszufällen, wobei ein neutralisierter Schlamm entsteht; und
entweder:
(a) Abscheiden einer nickel- und kobalthaltigen Lösung vom neutralisierten Schlamm; oder
(b) Extrahieren von Nickel und Kobalt aus dem neutralisierten Schlamm mit einem Harz-in-Pulpe-Verfahren zur Entstehung eines beladenen Harzes;
Waschen des beladenen Harzes; und
Eluieren von Nickel und Kobalt aus dem beladenen Harz unter Verwendung einer zweiten Säure zur Entstehung einer nickel- und kobalthaltigen Lösung; und
Gewinnen von Nickel und Kobalt aus der nickel- und kobalthaltigen Lösung, wobei etwa 60 % bis etwa 70 % des Kobalts und etwa 30 % bis etwa 55 % des im mageren Erz vorhandenen Nickels gewonnen werden.

2. Verfahren nach Anspruch 1, wobei die Säure H₂SO₄ ist.

3. Verfahren nach Anspruch 1, wobei das magere Erz mit etwa 100 bis etwa 200 kg der Säure pro Tonne mageren Erzes ausgewaschen wird.

4. Verfahren nach Anspruch 1, wobei das magere Erz mit etwa 100 kg der Säure pro Tonne mageren Erzes ausgewaschen wird.

5. Verfahren nach Anspruch 1, wobei die Temperatur etwa 80 °C beträgt.

6. Verfahren nach Anspruch 1, wobei das magere Erz ein nickellatentes Erz ist.

7. Verfahren nach Anspruch 1, wobei das magere Erz ein Prozessabraum ist.

8. Verfahren nach Anspruch 1, wobei der Prozessabraum ein Caron-Anlagenabraum ist.

9. Verfahren nach Anspruch 1, wobei das Erz etwa 24 bis etwa 48 Stunden lang ausgewaschen wird.

10. Verfahren nach Anspruch 1, ferner umfassend die Zugabe eines Reduktionsmittels während des Auswaschens.

11. Verfahren nach Anspruch 10, wobei das Reduktionsmittel Schwefeldioxid ist.

12. Verfahren nach Anspruch 1, ferner umfassend das Belüften oder die Sauerstoffanreicherung des Auswaschschlamms vor oder während der Zugabe eines Alkalis zum Auswaschschlamm.

13. Verfahren nach Anspruch 1, wobei die kontaminierenden Elemente Eisen, Aluminium, Siliziumdioxid, Chrom, Zing, Magnesium, Mangan, Kupfer oder eine beliebige Kombination davon sind.

14. Verfahren nach Anspruch 1, wobei das Alkali Kalkstein, Kalk, Magnesia, Natriumkarbonat oder Natriumhydroxid ist.

15. Verfahren nach Anspruch 1, wobei weniger als etwa 1 % des im mageren Erz vorhandenen Eisens während des Auswaschens extrahiert wird.

## Revendications

1. Procédé pour récupérer du nickel et du cobalt à partir d'un minerai pauvre comprenant d'environ 7 % à environ 40 % de fer, moins d'environ 1,5 % de nickel et moins d'environ 0,2 % de cobalt, le procédé comprenant :
la lixiviation d'une bouillie du minerai pauvre avec environ 50 à environ 300 kg d'un acide par tonne de minerai pauvre pendant environ 3 heures à environ 72 heures à une température comprise entre la température ambiante et les environs du point d'ébullition de la solution pour former une bouillie de lixiviation, où moins d'environ 3,5 % du fer présent dans le minerai pauvre sont extraits durant la lixiviation ;
l'addition d'un alcali à la bouillie de lixiviation pour ajuster le pH de la bouillie dans la plage allant d'environ 3,5 à environ 5 et pour précipiter les éléments contaminants, où une bouillie neutralisée est formée ; et
soit :
(a) la séparation d'une solution contenant du nickel et du cobalt d'avec la bouillie neutralisée ; soit
(b) l'extraction de nickel et de cobalt à partir de la bouillie neutralisée par utilisation d'un traitement de résine en pulpe pour former une résine chargée ;
le lavage de la résine chargée ; et
l'élution de nickel et de cobalt à partir de la résine chargée par utilisation d'un deuxième acide pour former une solution contenant du nickel et du cobalt ; et
la récupération de nickel et de cobalt à partir de la solution contenant du nickel et du cobalt,
dans lequel environ 60 % à environ 70 % du cobalt et environ 30 % à environ 55 % du nickel présents dans le minerai pauvre sont récupérés.

2. Procédé selon la revendication 1, dans lequel l'acide est H₂SO₄.

3. Procédé selon la revendication 1, dans lequel le minerai pauvre est lixivié avec environ 100 à environ 200 kg de l'acide par tonne de minerai pauvre.

4. Procédé selon la revendication 1, dans lequel le minerai pauvre est lixivié avec environ 100 kg de l'acide par tonne de minerai pauvre.

5. Procédé selon la revendication 1, dans lequel la température est d'environ 80 °C.

6. Procédé selon la revendication 1, dans lequel le minerai pauvre est un minerai de latérite de nickel.

7. Procédé selon la revendication 1, dans lequel le minerai pauvre est un résidu de traitement.

8. Procédé selon la revendication 1, dans lequel le résidu de traitement est un résidu d'usine Caron.

9. Procédé selon la revendication 1, dans lequel le minerai est lixivié pendant environ 24 à environ 48 heures.

10. Procédé selon la revendication 1, comprenant en outre l'addition d'un réducteur durant la lixiviation.

11. Procédé selon la revendication 10, dans lequel le réducteur est le dioxyde de soufre.

12. Procédé selon la revendication 1, comprenant en outre l'aération ou l'oxygénation de la bouillie de lixiviation avant ou pendant l'addition d'un alcali à la bouillie de lixiviation.

13. Procédé selon la revendication 1, dans lequel les éléments contaminants sont le fer, l'aluminium, la silice, le chrome, le zinc, le magnésium, le manganèse, le cuivre ou l'une quelconque de leurs combinaisons.

14. Procédé selon la revendication 1, dans lequel l'alcali est le calcaire, la chaux, la magnésie, le carbonate de sodium ou l'hydroxyde de sodium.

15. Procédé selon la revendication 1, dans lequel moins d'environ 1 % du fer présent dans le minerai pauvre est extrait durant la lixiviation.
